Europäisches Patentamt

(19) European Patent Office · (11) Publication number: **0 270 549**

Office européen des brevets · **B1**

(12) **EUROPEAN PATENT SPECIFICATION**

(45) Date of publication of patent specification: **04.04.90** · (51) Int. Cl.⁵: **B 22 F 3/04, B 22 F 5/00, F 02 F 1/16, F 16 J 10/04**

(21) Application number: **86905462.7**

(22) Date of filing: **21.08.86**

(86) International application number:
**PCT/SE86/00374**

(87) International publication number:
**WO 87/01317 12.03.87 Gazette 87/06**

(54) **METHOD OF PRODUCING A CYLINDER LINING DEVICE.**

(30) Priority: **04.09.85 SE 8504125**

(43) Date of publication of application:
**15.06.88 Bulletin 88/24**

(45) Publication of the grant of the patent:
**04.04.90 Bulletin 90/14**

(84) Designated Contracting States:
**AT BE CH DE FR GB IT LI LU NL SE**

(56) References cited:
**FR-A-1 116 882**
**GB-A- 598 423**
**GB-A-1 470 584**
**US-A-1 226 470**

**Derwent's abstract No. 38775 E/19, SU 846106, 25 July 1981. Leningradski ordena Lenina Polytechniski institut**

(73) Proprietor: **KB Cold Isostatic Press Systems CIPS**
**Box 501**
**S-263 01 Höganäs (SE)**

(72) Inventor: **PETTERSSON, Ola**
**Vipvägen 3**
**S-263 00 Höganäs (SE)**
Inventor: **BOHLIN, Yngve**
**Hittarpsvägen 9**
**S-254 84 Helsingborg (SE)**
Inventor: **TRYGGMO, Alf**
**Tistelvägen 5**
**S-260 40 Viken (SE)**

(74) Representative: **Henningsson, Gunnar**
**Bergling & Sundbergh AB Box 7645**
**S-103 94 Stockholm (SE)**

Courier Press, Leamington Spa, England.

## Description

### Technical Field

The invention relates to a method of producing a cylinder lining device by the radial isostatic pressing of a powder into a pressed body, and sintering the body.

### Background

It is well known in the art to construct an engine block for internal combustion engines using exchangeable cylinder linings. Such linings can be manufactured using powder metallurgy, an annular, cylindrical mould being filled with a metal powder, e.g. steel powder, subsequent to which the powder is isostatically compacted in the mould at high pressure, e.g. 400 bar, to form a generally annular, cylindrical pressed body. The powder is pressed radially inwards in the mould against a mandrel constituting the solid inner surface of the mould. The resulting pressed body is sintered, calibrated in some cases, and has a cylinder wall surface suited to the purpose, after possible lapping of this surface. The lining is porous, which may be advantageous for retaining a lubricant on the inner surface of the lining. Using powder metallurgy, the use of machine cutting tools is avoided to a great extent, and the wearing surfaces of the lining can be given desired resistance to abrasion, hardness and the like.

It is further known to produce cylinder linings by centrifugally casting a generally annular and cylindrical casting, and by cutting machining giving the inner surface of the casting the dimension and degree of fineness required for a cylinder lining.

The disadvantages with conventional engine blocks having separate linings for each cylinder are, inter alia, the following:

Conventional locating means, support surfaces and seals are required for each individual lining. Great demands are made on the tolerances for the engine block support surfaces and locating means for the linings in respect of their relative mutual positions and the orientation thereof. The cylinders must be arranged at comparatively large mutual spacing in the engine block.

One object of the invention is to provide a method resulting in a cylinder lining device which reduces the mentioned disadvantages, although still embracing the use of powder metallurgy in the production of such a device.

### Characterization of the Invention

A method of producing a cylinder lining device by radial isostatic compaction of a powder into a pressed body, and sintering the body, is distinguished by the powder being compacted into a pressed body unit comprising at least two mutually laterally disposed and integral cylinder lining pressed bodies, the unit being formed by isostatically compacting the powder of each lining radially outwards from the centre of the respective lining towards a surrounding rigid mould surface.

In accordance with a preferred execution of the method, the substantially annular and circular cylinder lining pressed bodies of the unit are arranged with a center-to-center distance which is less than the sum of the wall thickness of the bodies and the inner radii of both linings.

Cylinder lining devices are produced by the inventive method such as to comprise at least two cylinder linings that are mutually integral and meet requirements for mutual positioning and orientation. Since the cylinder lining device can be produced by radial isostatic compaction without the occurrence of cracks, due to the radially outwardly directed compaction, all of the advantages of powder metallurgy can be essentially retained. For a cylinder lining device comprising at least two mutually integral linings, the advantages of powder metallurgy with regard to general casting techniques are that centrifugal casting cannot be applied to more than one lining, and that static casting can result in distortions in the device, due to stresses occurring during cooling, difficulties with desired thin sections and high coats due to extensive machining. In addition, static casting usually results in poorer material quality than centrifugal casting.

Cylinder linings usually have large axial length in relation to wall thickness, and this means that single-axis powder compression can not be applied. Conventional isostatic compression of a powder radially inwards towards a solid core results in that cracks occur in the bonding zone with linings in cylinder lining devices comprising two or more mutually integral linings. The inventive distinguishing feature of arranging the isostatic pressure radially outwards against a surrounding rigid mould surface results in that such crack formation is avoided.

By producing the cylinder lining device using cold isostatic compaction of a single cohesive powder mass to form an integral pressed body, which is then sintered and possibly calibrated, the material portion joining the linings can be given small dimensions, without risk of deforming the inner surfaces of the linings defined by the mandrel, without risking incorrect alignment or center-to-center distance of the linings, and without risking dangerous stresses in the zone joining the linings. Further to this, as already mentioned, the center-to-center distance between the linings can be made less than the inner diameter of the linings plus twice their wall thickness.

Since at least two integral linings are produced, the requirement for the number of support surfaces for the linings in the engine block is also reduced.

It is also possible to obtain satisfactory cooling of the cylinders in the joining zone, since the shape and dimensions of the zone may be selected in the mentioned way without any inconvenience.

It will thus be understood that a salient advantage of the inventive method is that the linings in the cylinder lining device can be disposed at the center-to-center spacings of less than the lining inner diameter plus twice their wall thickness in view of the possibility to reduce the size of the engine block and the number of supporting surfaces and location means for the linings in the engine block.

It is emphasized that the inventive method permits the production of cylinder lining devices which can comprise more than two integral cylinder linings, and that the mutual arrangement of cylinder linings can be selected to suit a desired cylinder arrangement in the engine block. The device may thus comprise four integral cylinder linings in line, or any other configuration thereof, such as correspond to conventional cylinder arrangements in internal combustion engines.

Since the cylinder linings are isostatically pressed radially outwards by an interiorly pressurized elastic mandrel or the like, against a rigid, exterior mould surface, there is the disadvantage that the liner inner surfaces need to be machined, but the advantage is gained that material thickness will be uniform, which is essential as casting into aluminium, there otherwise being the risk that annular stress concentrations can cause distortion, or even collapse of the material. In addition, the outer surfaces of the device will be well defined, so that these do not need to be further machined for mating up well with complemental locating and support surfaces in the engine block, the critical cooling regions where the individual linings join on to each other being given the required dimensions and surface accuracy to enable achieving a predetermined cooling of the device.

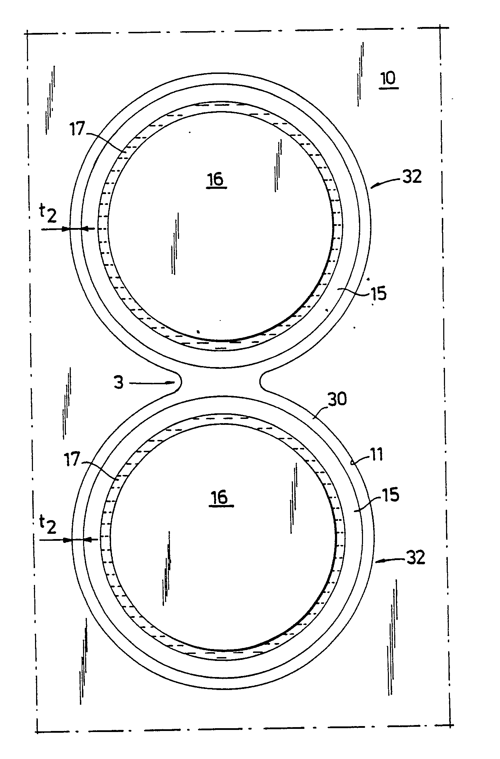

The invention, which is defined in the accompanying claims, will now be described in the form of an example, and with reference to the appended drawing.

Drawing
The sole figure on the drawing schematically illustrates a section through an isostatic press for the production of a pressed body which can be conventionally processed to form a cylinder lining device comprising two such linings.

Example of Embodiment
A press tool for an isostatic press is illustrated on the drawing. The tool has a cavity 30, in the general configuration of the numeral 8. Radially outwardly the cavity is defined by a wall 11 in a fixed die 10, radially inwardly the cavity is defined by two radially outwardly expandable elastic walls 15, each surrounding a core 16, a pressurising fluid being arranged for introduction into the annular gap between the core 16 and the wall 15 for expanding the latter radially outwards.

The mould cavity 30 may be regarded as consisting of two circular-cylindrical moulds in tandem and with parallel longitudinal axes, the moulds being substantially mutually tangential, although open in the region 3 of the tangent. The cavity 30 is filled with a steel powder, and highpressure fluid is introduced into the chambers 17 between the respective core, and elastic wall 15, so that the latter expands radially outwards to isostatically compact the powder against the wall 11 of the die 10. The drawing may be regarded as illustrating the expanded state of the elastic walls.

The cylinder linings produced in the respective mould part 32 are given an inner diameter suited to the diameter of the piston for which the lining is intended, and the resulting wall thickness $t_2$ of the lining is made a minimum while maintaining the prescribed requirements. As an example may be mentioned that the linings of the device may have an inside diameter of about 80 mm, a wall thickness of about 3 mm and an axial length of about 144 mm. In the illustrated example, a cylinder lining device is produced comprising two linings which are substantially alike and have a centre-to-center distance substantially equal to the inside diameter of the linings plus the wall thickness $t_2$, the width of the integrating material between the linings being about 20 mm. The ends of this "bridge" are rounded to avoid stress concentrations, and it extends preferably for the entire axial length of the device.

It should be quite clear, however, that the center-to-center distance may be selected smaller than the outside diameter of a lining, e.g. the thickness of a lining plus its inside diameter.

An advantage with the resulting lining device is that the engine block can be made smaller, and that the crankshaft can be made shorter.

Although the lining device has been stated as utilizable for internal combustion engines, it will be obvious that it can also be used for pumps and compressors of the piston-cylinder type.

## Claims

1. Method of producing a cylinder lining device by radial isostatic radial compression of a powder into a pressed body and sintering the body, characterized in that the powder is compressed into the shape of a pressed body unit comprising at least two mutually integral cylinder lining pressed bodies arranged in tandem, and in that the unit is formed by isostatic compression of the powder for each lining, the compression being radially outwards towards a surrounding rigid mould surface.

2. Method as claimed in claim 1, characterized in that the substantially annular, cylindrical lining pressed bodies integrally joined into the pressed body unit are arranged with a center-to-center distance which is less than the sum of the wall thicknesses of both lining pressed bodies and their inisde diameters.

3. Method as claimed in claim 2, characterized in that the lining pressed bodies are essentially indentical and that the center-to-center distance between them is arranged to be less than the outside diameter of a lining pressed body.

## Patentansprüche

1. Verfahren zur Herstellung einer Zylinderauskleidungseinrichtung durch isostatische radiale Verdichtung eines Pulvers in einen Preßkörper sowie zum Sintern des Körpers, dadurch gekennzeichnet, daß das Pulver in die Gestalt einer Preßkörpereinheit, die wenigstens zwei zueinander integrale Zylinderauskleidungspreßkörper in Tandemanordnung umfaßt und daß die Einheit durch isostatische Verdichtung des Pulvers für jede Auskleidung geformt wird, wobei die Verdichtung radial nach außen gegen eine umgebende steife Formfläche vorgenommen wird.

2. Verfahren nach Anspruch 1, dadurch gekennzeichnet, daß im wesentlichen die ringförmigen zylindrischen einteilig in der Preßkörpereinheit vereinigten Auskleidungspreßkörper mit einem Abstand von Mitte zu Mitte angeordnet sind, der geringer als die Summe der Wanddicken beider Auskleidungspreßkörper sowie deren Innendurchmesser ist.

3. Verfahren nach Anspruch 2, dadurch gekennzeichnet, daß die Auskleidungspreßkörper im wesentlichen gleich sind und daß der Abstand von Mitte zu Mitte zwischen ihnen so getroffen ist, daß er geringer als der Außendurchmesser eines Auskleidungspreßkörpers ist.

**Revendications**

1. Méthode de fabrication d'un dispositif de chemisage cylindrique par compression isostatique radiale d'une poudre en une préforme, puis frittage de la préforme, caractérisée en ce que la poudre est comprimée sous la forme d'une unité de préforme comportant au moins deux préformes de chemisage cylindrique solidaires l'une de l'autre, agencées en tandem, et en ce que l'unité est formée par compression isostatique de la poudre pour chaque chemisage, la compression allant radialement vers l'extérieur sur une surface de moulage rigide enveloppante.

2. Méthode telle que revendiquée dans la revendication 1, caractérisée en ce que les préformes de chemisage cylindrique, pratiquement annulaires, solidarisées dans l'unité de préforme, sont agencées avec une distance d'axe à axe qui est inférieur à la somme des épaisseurs de paroi des deux préformes de chemisage et de leurs diamètres internes.

3. Méthode telle que revendiquée dans la revendication 2, caractérisée en ce que les préformes de chemisage sont pratiquement identiques et que la distance d'axe à axe entre elles est agencée pour être inférieure au diamètre extérieur d'une préforme de chemisage.